# FASCICULE DE BREVET EUROPEEN

(11) **EP 1 156 312 B1**
(45) Date de publication et mention de la délivrance du brevet: **20.02.2008**
(21) Numéro de dépôt: 01440132.7
(22) Date de dépôt: 15.05.2001
(51) Int. Cl.: G01K 1/14

(54) **Dispositif de logement d'une sonde de mesure de température à travers la paroi d'un contenant**
Vorrichtung zur Aufnahme eines Sensors durch die Wand eines Behälters
Device for lodging a temperature sensor through the wall of a container

(30) Priorité: 19.05.2000 FR 0006463
(43) Date de publication de la demande: 21.11.2001
(73) Titulaire: DE DIETRICH, 67110 Niederbronn-les-Bains (FR)
(72) Inventeur: Schmidt, Rémy, 67340 Offwiller (FR)
(74) Mandataire: Metz, Paul

(56) Documents cités:
- DE-A- 1 913 267
- FR-A- 2 022 633
- US-A- 5 234 527

## Description

La présente invention concerne un dispositif de logement d'une sonde de mesure de la température interne d'un contenant, tel que par exemple un réacteur, une citerne, une colonne ou autre, à travers une paroi de celui-ci.

Afin de contrôler une réaction chimique, il est souvent capital de connaître la température du milieu réactionnel se trouvant à l'intérieur du réacteur. Une telle information permet non seulement d'agir rétroactivement sur les moyens de chauffage ou de refroidissement du réacteur pour obtenir ou maintenir la température souhaitée, mais également de s'assurer que la réaction chimique s'effectue correctement. En effet, une brusque montée en température traduit souvent une réaction qui s'emballe et la détection rapide d'une telle situation peut être cruciale pour la sécurité des employés, de l'équipement et de l'environnement.

Un dispositif permettant de mesurer efficacement la température du contenu du réacteur est de ce fait grandement souhaité. Il doit néanmoins répondre à plusieurs exigences.

Tout d'abord, pour des raisons de sécurité, ce dispositif doit être étanche et résister à la pression interne du réacteur. Il doit ensuite permettre une mesure fiable, rapide et précise de la température, tout en limitant les interférences avec la température du milieu extérieur ou celle des moyens de chauffage ou de refroidissement du réacteur.

En outre, pour des raisons de simplicité et d'économie, ce dispositif de mesure de température doit pouvoir être adaptable aux types de sondes existantes et doit pouvoir être réalisé facilement sur tout type de réacteur, voire sur d'autres appareils, et ce pour le plus faible coût possible.

Pour finir, ce dispositif doit permettre un accès facile à la sonde de l'extérieur pour pouvoir la changer de manière rapide, aisée et sans interférer avec le déroulement de la réaction en cours dans le réacteur.

De façon classique dans l'art antérieur, pour mesurer la température à l'intérieur d'un réacteur, on réalise une tubulure dans la paroi de celui-ci, puis on y introduit une sonde de mesure de température entourée d'une gaine thermométrique. L'extrémité de la sonde est alors en contact avec le milieu réactionnel et peut ainsi mesurer sa température.

La réalisation d'une telle tubulure implique une perforation de la paroi du réacteur et un colmatage local des éventuelles doubles enveloppes au niveau de l'orifice, afin de constituer pour la sonde un passage traversant jusqu'à l'intérieur du réacteur.

La tubulure traversant complètement la paroi du réacteur, il est indispensable de prévoir un dispositif d'étanchéité très performant assurant une fermeture parfaitement étanche de la tubulure une fois que la sonde est mise en place. Il est en effet primordial, pour des raisons de sécurité et d'économie, d'éviter tout risque de fuite lorsque le réacteur est rempli.

La réalisation d'un tel système de mesure de température est difficile et onéreuse. Il nécessite l'utilisation d'une gaine thermométrique ainsi que d'un dispositif d'étanchéité et de fixation pour maintenir la sonde qui y est introduite. Ce dispositif peut poser de nombreux problèmes d'étanchéité pouvant être dangereux.

De plus, du fait du caractère traversant de la tubulure, tout retrait de la sonde lorsque le réacteur est en fonctionnement est impossible. Si la sonde est défectueuse ou inadaptée, il faut vider le réacteur avant de pouvoir la remplacer.

Pour toutes ces raisons, ce système connu de mesure de la température interne d'un contenant est peu satisfaisant.

Afin d'éviter ces problèmes d'étanchéité, un autre dispositif de mesure, utilisant une sonde de mesure de température de type contact, a également été proposé dans l'art antérieur.

La sonde de mesure de température est cette fois maintenue en contact contre une partie localement amincie de la paroi du réacteur et mesure la température du contenu du réacteur à travers la paroi. La réalisation d'une ouverture traversante est ainsi évitée.

Cependant, avec ce dispositif, la sonde est non seulement en contact avec la paroi amincie du réacteur mais très proche du fluide de chauffage ou de refroidissement contenu dans la double enveloppe ou le serpentin. Ainsi, en raison de la conductibilité thermique de la paroi massive et de la proximité du fluide de chauffe ou de refroidissement, celui-ci influe de manière importante sur la température mesurée par la sonde conduisant à un résultat particulièrement imprécis et peu représentatif de la température intérieure. Ce problème est encore accru lorsque la surface interne du réacteur est revêtue d'une couche d'émail qui constitue un bon isolant thermique entre le milieu réactionnel et la sonde.

Ce défaut pourrait être atténué en amincissant la paroi du réacteur sur une plus grande superficie, afin d'éloigner les perturbations thermiques du point de mesure placé au centre de cette zone de faible épaisseur. Cependant, dans ce cas, le contenu du réacteur risquerait d'exercer une pression trop forte sur cette zone mince mais de grande superficie qui pourrait ne pas y résister.

Ce dispositif antérieur comporte trop d'inconvénients majeurs pour satisfaire réellement aux exigences souhaitées.

Le but de la présente invention est de fournir un dispositif de logement pour une sonde de mesure de température qui permette une mesure fiable, rapide et précise de la température intérieure, tout en réduisant au minimum les interférences thermiques provoquées par les moyens de chauffage ou de refroidissement et/ou le milieu extérieur et sans présenter les inconvénients des systèmes précédemment décrits.

Pour résoudre ce problème technique le principe de la présente invention consiste à éloigner le point de mesure vers l'intérieur du contenant en réalisant une déformation localisée de la paroi sous la forme d'un renfoncement, non traversant, vers l'intérieur du contenant pouvant servir de logement à une sonde de mesure de température par contact.

L'épaisseur de la paroi du contenant diminue progressivement au niveau de ce renfoncement, jusqu'à devenir minimale au niveau du point de mesure correspondant de préférence à l'endroit le plus à l'intérieur du contenant.

Une sonde classique de mesure de température par contact est alors simplement introduite dans le dispositif de logement selon l'invention jusqu'à entrer en contact avec la zone frontale du renfoncement correspondant à une zone de paroi amincie du contenant à travers laquelle la température du milieu réactionnel est mesurée.

Grâce au dispositif de logement selon l'invention, la mesure est effectuée loin de toute source de perturbation, notamment thermique. De plus, le logement étant entouré de liquide dont la température est à mesurer, la surface d'échange thermique avec celui-ci est considérablement augmentée. La mesure est donc fiable, précise, représentative de la température intérieure et d'autant moins soumise à inertie que la paroi de contact est mince.

Néanmoins, l'épaisseur n'étant minimale que sur une faible surface, la paroi peut sans problème résister à la pression exercée par le contenu du réacteur.

En outre, le dispositif de logement selon l'invention ne débouchant pas à l'intérieur du réacteur, il ne se pose aucun problème d'étanchéité. La réalisation coûteuse et l'utilisation problématique d'une tubulure sont ainsi évitées. On économise également une gaine thermométrique.

Par ailleurs, la sonde, ne plongeant pas directement dans le réacteur, peut être facilement et rapidement changée ou retirée sans affecter en quoi que se soit le déroulement de la réaction à l'intérieur du réacteur.

Grâce au dispositif de logement selon l'invention, on combine les avantages offerts par une sonde plongeant dans le réacteur et ceux d'une sonde contact sans en subir les inconvénients respectifs.

Le dispositif de logement selon l'invention est très peu onéreux et facilement réalisable sur tout type de réacteurs, colonnes, citernes, contenants ou autres. De plus, la plupart des sondes existantes de mesure de température par contact peuvent y être facilement adaptées.

D'autres caractéristiques et avantages de l'invention apparaîtront à la lecture de la description détaillée qui va suivre, description faite en référence aux dessins annexés, dans lesquels :
- la figure 1 est une coupe longitudinale schématique d'un réacteur équipé d'une tubulure et d'une sonde de mesure de température plongeant dans le réacteur selon l'art antérieur ;
- la figure 2 est un agrandissement vu en coupe de la partie du réacteur de la figure 1 équipée d'une tubulure et d'une sonde de mesure de température plongeant dans le réacteur selon l'art antérieur ;
- la figure 3 est une coupe longitudinale schématique d'un réacteur équipé d'une sonde de mesure de température par contact montée contre la paroi du réacteur selon l'art antérieur ;
- la figure 4 est un agrandissement vu en coupe de la partie du réacteur de la figure 3 équipée d'une sonde de mesure de température par contact montée contre sa paroi selon l'art antérieur ;
- la figure 5 est une coupe longitudinale schématique d'un réacteur équipé, selon la présente invention, d'un dispositif de logement pour sonde de mesure de température par contact contre la paroi ;
- la figure 6 est un agrandissement vu en coupe de la partie du réacteur de la figure 5 comportant, selon la présente invention, un dispositif de logement pour sonde de mesure de température par contact contre la paroi ;
- la figure 7 est un agrandissement vu en coupe, similaire à celui de la figure 6, de la partie du réacteur de la figure 5 comportant un dispositif de logement selon l'invention dans lequel est positionnée une sonde de mesure de température par contact ; et
- la figure 8 est une coupe longitudinale schématique d'une colonne, par exemple de distillation, équipée d'une pluralité de dispositifs de logement, selon la présente invention, pour sondes de mesure de température par contact montées dans la paroi latérale de cette colonne.

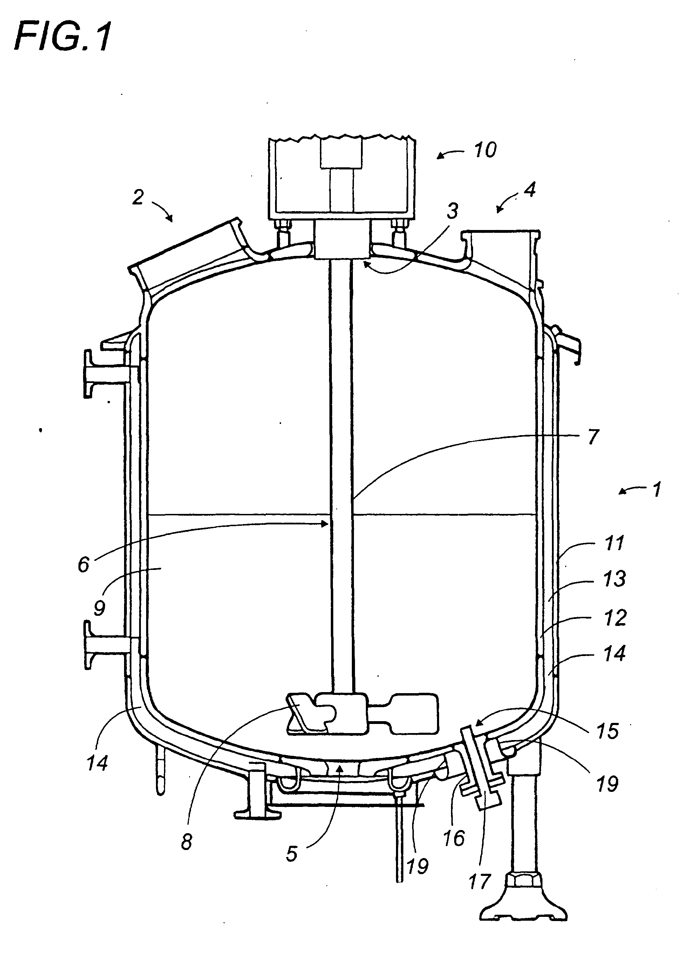

Le dispositif de logement pour sonde de mesure de température par contact à travers la paroi d'un contenant selon la présente invention va maintenant être décrit de façon détaillée en référence aux figures 1 à 8. Les éléments équivalents représentés sur les différentes figures porteront les mêmes références numériques.

Les figures 1, 3 et 5 représentent schématiquement un réacteur chimique 1 à trois ouvertures supérieures 2, 3 et 4 pouvant servir à introduire les différents réactifs, solvants et catalyseurs ou à plonger divers instruments ou accessoires (agitateur, brise-lames, sondes, organes de prélèvement...) dans le réacteur 1 et d'un orifice inférieur 5 permettant de le vider entièrement de son contenu au moyen d'une vanne de vidange.

Le réacteur 1 est équipé d'un agitateur mécanique 6 dont la tige 7 traverse l'ouverture centrale 3 et plonge vers la partie inférieure du réacteur. La tige 7 se termine par un ensemble de trois pales inclinées 8 brassant le contenu 9 du réacteur 1 lorsque la tige est entraînée en rotation par un moteur d'entraînement 10 disposé à l'extérieur du réacteur.

Une deuxième paroi 11 entoure la paroi interne 12 du réacteur 1 à une certaine distance de celle-ci de manière à ménager entre ces deux parois un espace annulaire fermé 13. Ce volume 13 est destiné à recevoir un fluide caloporteur 14 chaud ou froid afin de réguler la température interne du réacteur selon le principe bien connu de la double enveloppe ou jaquette.

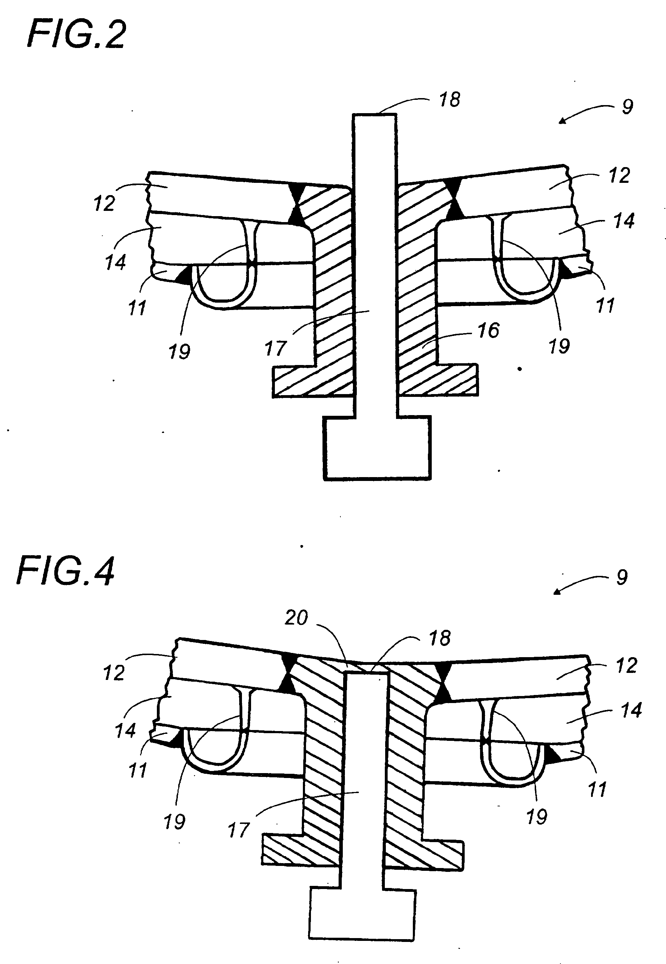

Les figures 1 et 2 illustrent le système conventionnel de mesure de température au moyen d'une sonde plongeant dans le réacteur selon l'art antérieur.

Le réacteur 1 présente dans sa partie inférieure un orifice 15 permettant d'accéder à son volume intérieur. Cet orifice 15 constitue l'extrémité intérieure d'une tubulure 16 prenant naissance à l'intérieur du réacteur, traversant la double enveloppe et débouchant en saillie vers l'extérieur.

La tubulure 16 permet d'introduire une sonde 17 de mesure de température dont l'extrémité 18 réalisant la mesure est plongée dans le liquide 9 contenu dans le réacteur. Le diamètre interne de la tubulure 16 doit être sensiblement supérieur au diamètre externe de la sonde afin de permettre son insertion.

L'espace fermé 13 servant de volume au fluide 14 de réchauffement ou de refroidissement du réacteur 1 est localement interrompu par des parois 19 à proximité du dispositif de mesure de la température.

Un tel dispositif doit obligatoirement comporter des moyens d'étanchéité et d'isolation (non représentés) afin d'éviter tout risque de fuite lorsque la sonde 17 est placée dans la tubulure 16 ainsi qu'une gaine thermométrique.

Ce dispositif coûteux et problématique n'est guère satisfaisant.

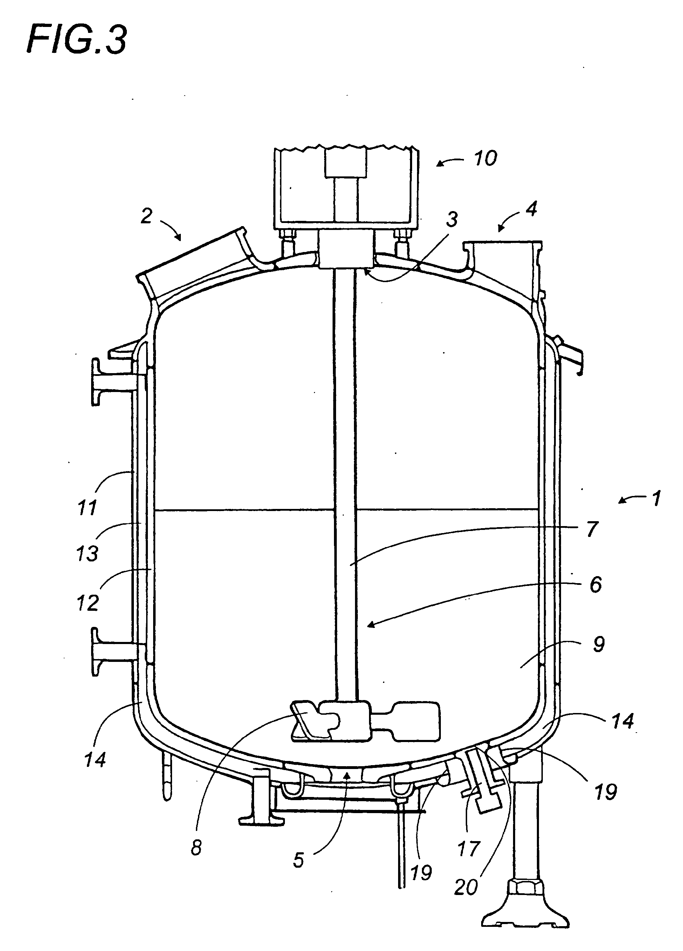

Un autre dispositif de mesure de température proposé dans l'art antérieur est illustré par les figures 3 et 4.

La sonde 17 est cette fois une sonde de mesure de température par contact contre une paroi. Elle est placée contre la paroi interne 12 du réacteur 1 au niveau d'une diminution locale 20 de l'épaisseur de cette paroi interne 12.

La zone 20 de paroi de faible épaisseur reste de petite dimension afin de résister à la pression interne du réacteur 1.

La sonde 17 mesure la température de la paroi 12 au niveau de cet amincissement 20 avec lequel est en contact l'extrémité 18 de la sonde où s'effectue la mesure. La paroi 12 étant fine au niveau de l'amincissement 20 et étant en contact direct avec le liquide 9 sur son autre face, cette mesure est sensée donner une bonne approximation de la température du liquide 9 contenu dans le réacteur.

Cependant, la paroi interne 12 du réacteur est également en contact sur son autre face avec le fluide 14 de réchauffement ou de refroidissement et ce jusqu'aux parois d'interruption 19.

L'extrémité 18 de la sonde, où s'effectue la mesure, est très proche du fluide 14 de réchauffement ou de refroidissement. La mesure est donc fortement influencée thermiquement par la conductibilité thermique de la paroi massive 12 et par la proximité du fluide caloporteur 14. Les variations rapides de la température du milieu réactionnel sont masquées du fait de l'inertie de la paroi massive 12.

Un tel dispositif possède un temps de réponse trop long et procure un résultat imprécis.

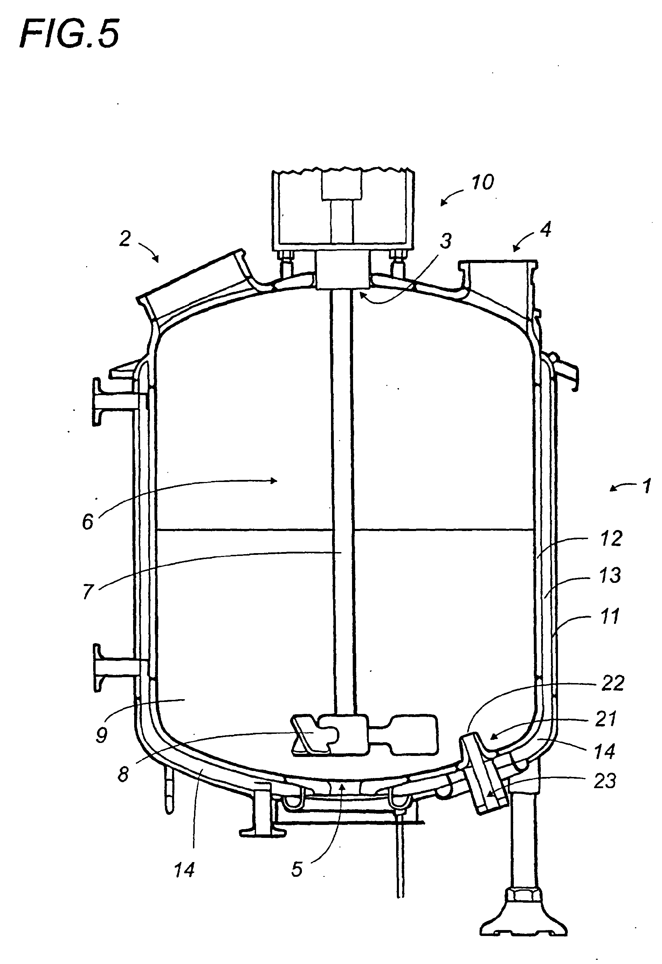

La figure 5 illustre un réacteur 1 similaire aux précédents, mais comportant cette fois le dispositif de logement selon la présente invention.

La paroi intérieure 12 du réacteur 1 a été déformée localement vers l'intérieur dans sa partie inférieure de manière à former un renfoncement 21 orienté vers l'intérieur du réacteur 1 de préférence perpendiculairement à la paroi.

Au niveau du renfoncement 21, l'épaisseur de la paroi 12 diminue progressivement jusqu'à être minimale dans le fond 22 de celui-ci, constituant une face frontale regardant vers l'intérieur du contenant.

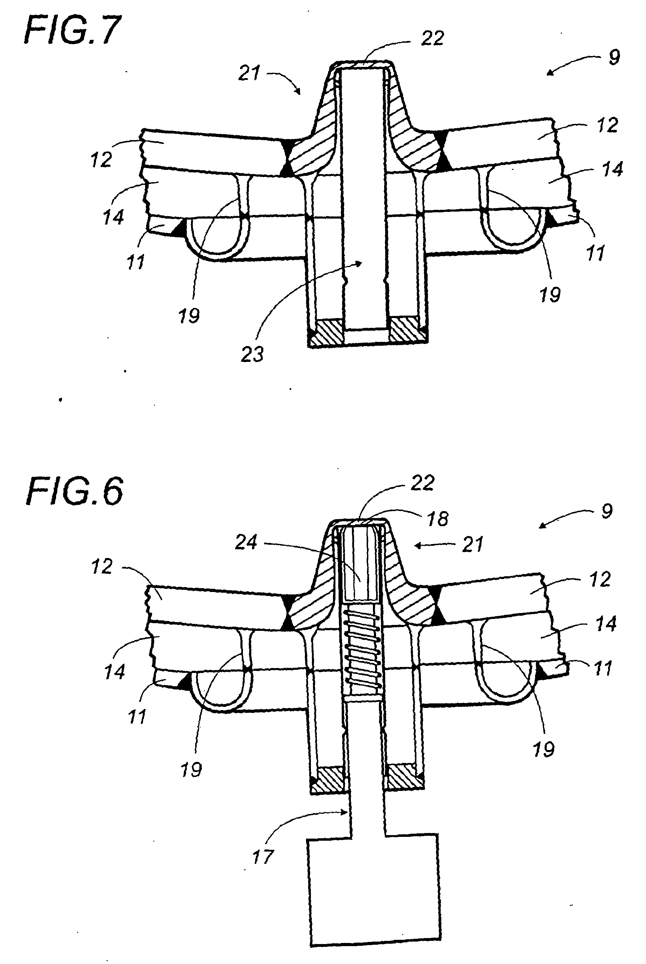

Le renfoncement délimite, du côté extérieur au réacteur 1, un espace creux 23 susceptible de loger une sonde 17 de mesure de la température locale par contact. La sonde 17, représentée sur la figure 7, peut ainsi être insérée dans le logement 23, son extrémité sensible 18 étant placée contre le fond aminci 22. La mesure de température s'effectue donc à travers la paroi de fond 22 de plus faible épaisseur.

Du fait de la déformation de la paroi 12, le point de mesure situé sur le fond 22 du renfoncement 21 est éloigné de la double enveloppe et du fluide 14 de chauffage ou de refroidissement qu'elle contient. Les perturbations thermiques de la mesure liées à la proximité du fluide caloporteur 14 sont ainsi considérablement réduites.

De plus, le renfoncement 21 constitue une protubérance baignant complètement dans le milieu réactionnel 9. A ce niveau et sur une grande surface, la paroi 12 n'est en contact qu'avec le liquide 9 contenu dans le réacteur et non simultanément avec le fluide caloporteur 14.

Ainsi, la surface d'échange thermique est considérablement augmentée et les perturbations réduites par rapport au dispositif antérieur illustré par les figures 3 et 4.

Néanmoins, la zone d'épaisseur minimale étant limitée au fond 22 de faible superficie, la paroi 12 peut parfaitement résister à la pression exercée par le contenu du réacteur.

Lorsqu'elle est placée dans le dispositif de logement selon l'invention, toute la partie supérieure 24 de la sonde 17 est entourée d'une enveloppe métallique mince, elle-même entourée de liquide 9. La paroi du fond 22 étant en outre très fine, la sonde 17 se retrouve pratiquement dans les mêmes conditions que la sonde plongeante du dispositif représenté sur les figures 1 et 2. La mesure de température effectuée est précise et son temps de réponse amélioré.

La paroi 12 n'est cependant perforée à aucun endroit du renfoncement 21 qui reste non traversant. On évite ainsi les problèmes d'étanchéité du dispositif de logement selon l'art antérieur. En outre, le dispositif de logement selon la présente invention ne nécessite ni la réalisation d'une tubulure, ni l'utilisation d'une gaine thermométrique.

Grâce au dispositif de logement selon l'invention, le point de mesure est situé dans une zone où le liquide réactionnel 9 présente une température représentative de celle du reste du contenu du réacteur et n'est pas faussement accrue ou diminuée par un contact direct avec la double enveloppe.

De plus, le renfoncement selon l'invention est préférentiellement réalisé dans la partie inférieure du réacteur 1 comme illustré sur la figure 5. Ainsi, la sonde est placée dans une zone toujours remplie, éloignée du flux thermique de surface et dans laquelle le milieu réactionnel 9 est homogène car largement brassé par l'agitateur 6.

Cependant, cet exemple n'est en aucune façon limitatif, le dispositif de logement selon l'invention pouvant être réalisé à un endroit quelconque de la paroi du réacteur au cours d'une opération relativement aisée et peu onéreuse.

Le dispositif de logement selon l'invention est aménagé de façon à pouvoir maintenir la sonde 17 en position de mesure et peut comporter à cet effet un moyen de maintien.

Sur la figure 7, on a représenté à titre d'exemple une sonde contact (de type SLR) qui se monte par poussoir dans le logement 23. Néanmoins le dispositif de logement selon l'invention peut être utilisé avec tout type de sonde de mesure de température par contact (les sondes de type DR et SVR par exemple), l'homme du métier pouvant sans difficulté concevoir un dispositif de maintien adapté au type de sonde souhaité. On peut par exemple envisager de rajouter un support à baïonnette dans le logement 23.

Les formes et dimensions du renfoncement 21 et du logement 23 ne sont évidemment pas limitées aux exemples décrits et illustrés. Il est parfaitement envisageable de les modifier sans sortir du cadre de la présente invention, afin de mieux répondre aux exigences techniques particulières de chaque situation.

Avantageusement, avec le dispositif de logement selon l'invention, la sonde 17 peut être aisément et rapidement mise en place, retirée ou remplacée à partir de l'extérieur du réacteur, sans que cela n'affecte en aucune manière le déroulement de la réaction.

Il est à noter que dans le cas d'un réacteur pourvu d'un ou de plusieurs serpentins s'enroulant autour de la paroi interne de celui-ci, le descriptif précité s'applique de la même façon. En effet, dans ce cas on peut retrouver le même problème de perturbation thermique avec le ou les serpentin(s) qu'avec la double enveloppe. Le dispositif de logement selon l'invention, pouvant être réalisé comme précédemment sans aucune difficulté supplémentaire répond avantageusement à ce problème.

Dans le cas d'un réacteur dépourvu de double enveloppe ou de serpentin entourant la paroi interne de celui-ci, le descriptif précité peut également s'appliquer. En effet, on peut alors considérer que la température du milieu extérieur peut constituer une source de perturbation pour la mesure de la température du contenu du réacteur, si le point de mesure de la sonde n'est pas suffisamment éloigné et isolé thermiquement par rapport à celui-ci. Là encore, le dispositif selon l'invention peut apporter une amélioration non négligeable en ce qui concerne la précision et la rapidité de la mesure.

Le dispositif de logement pour sonde de mesure de température selon l'invention est particulièrement bien adapté pour être réalisé dans la paroi d'un réacteur tel que représenté sur les figures 1 à 7. Cependant, il doit être bien compris que son utilisation n'est pas limitée à cette application.

Ce dispositif de logement peut ainsi être ménagé dans la paroi d'un réacteur quelconque, émaillé ou non, quel que soit son aménagement et son moyen de régulation de la température.

De la même façon, le dispositif de logement selon l'invention n'est pas limité à un réacteur, mais peut être utilisé sur tout type de contenant pour lequel il est utile de mesurer la température du contenu. Un tel dispositif peut par exemple équiper un réservoir, une citerne, une colonne de distillation ou tout autre.

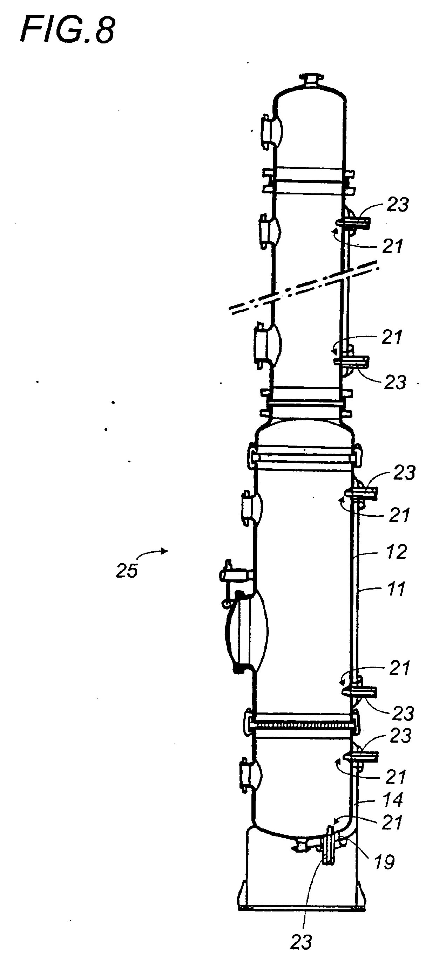

Sur la figure 8, on a représenté à titre d'exemple une colonne de distillation industrielle 25 comprenant une pluralité de dispositifs de logement selon l'invention susceptibles d'être équipés chacun d'une sonde de mesure de température à travers la paroi par contact avec celle-ci.

Dans cette variante, les dispositifs de logement selon l'invention ne sont pas uniquement ménagés dans la paroi inférieure du contenant comme dans l'exemple précédent du réacteur illustré sur les figures 5 à 7. Cinq dispositifs de logement selon l'invention sont également réalisés sensiblement horizontalement à différents niveaux de la paroi latérale de la colonne. On peut ainsi avantageusement mesurer la température du contenu à différentes hauteurs de la colonne à distiller correspondant à différents paliers de distillation.

Evidemment, le nombre et la disposition des différents dispositifs de logement selon l'invention ne sont donnés ici qu'à titre illustratif et ne sont en aucun cas limitatifs.

La réalisation d'un renfoncement étant une opération aisée et peu onéreuse, elle peut être effectuée sensiblement à n'importe quel emplacement et sur pratiquement n'importe quel type d'équipement industriel. On peut donc envisager d'adapter le dispositif de la présente invention aussi bien à un réacteur, qu'à une colonne, une citerne ou autre, et à un endroit quelconque de sa paroi.

## Revendications

1. Dispositif de logement d'une sonde de mesure de la température interne d'un contenant tel que par exemple un réacteur, une citerne, une colonne ou autre, à travers la paroi de celui-ci, **caractérisé en ce qu'**il comprend une déformation localisée de la paroi (12) du contenant (1, 25) sous la forme d'un renfoncement (21) ne traversant pas la paroi et dirigé vers l'intérieur du contenant et **en ce que** ce renfoncement (21) définit, du côté extérieur au contenant (1, 25), un espace creux appelé logement (23) susceptible de loger une sonde (17) de mesure de température par contact contre une paroi, la paroi de ce logement (23) formant une zone de mesure de température éloignée vers l'intérieur du contenant.

2. Dispositif de logement d'une sonde de mesure de température selon la revendication 1 **caractérisé en ce que** l'épaisseur de la paroi (12) du contenant (1, 25) diminue progressivement au niveau du renfoncement (21), jusqu'à être minimale dans la zone du point de mesure.

3. Dispositif de logement d'une sonde de mesure de température selon l'une quelconque des revendications précédentes **caractérisé en ce que** le fond (22) du logement (23), correspondant à la partie du logement la plus à l'intérieur du contenant (1), constitue la zone de mesure de température.

4. Dispositif de logement d'une sonde de mesure de température selon l'une quelconque des revendications précédentes **caractérisé en ce que** le renfoncement (21) baigne dans le milieu réactionnel (9) dans une zone éloignée du flux thermique de surface.

5. Dispositif de logement d'une sonde de mesure de température selon l'une quelconque des revendications précédentes **caractérisé en ce qu'**il est réalisé dans la partie inférieure du contenant (1).

6. Dispositif de logement d'une sonde de mesure de température selon l'une quelconque des revendications précédentes **caractérisé en ce qu'**il est susceptible de recevoir une sonde (17) de mesure de température se montant par poussoir dans le logement (23).

7. Dispositif de logement d'une sonde de mesure de température selon l'une quelconque des revendications 1 à 5 **caractérisé en ce qu'**il est susceptible de recevoir une sonde (17) de mesure de température par contact de type SLR, DR ou SVR.

8. Dispositif de logement d'une sonde de mesure de température selon l'une quelconque des revendications précédentes **caractérisé en ce qu'**il comporte un moyen de maintien de la sonde (17) en position de mesure.

9. Dispositif de logement d'une sonde de mesure de température selon la revendication précédente **caractérisé en ce que** le moyen de maintien de la sonde (17) comprend un dispositif de baïonnette.

10. Dispositif de logement d'une sonde de mesure de température selon l'une quelconque des revendications précédentes **caractérisé en ce qu'**il est réalisé dans la paroi (12) d'un contenant (1) dont la température est régulée au moyen d'un fluide caloporteur (14) circulant dans une double enveloppe (13).

11. Dispositif de logement d'une sonde de mesure de température selon l'une quelconque des revendications 1 à 9 **caractérisé en ce qu'**il est réalisé dans la paroi (12) d'un contenant (1) dont la température est régulée au moyen d'un fluide caloporteur (14) circulant dans un serpentin.

12. Dispositif de logement d'une sonde de mesure de température selon l'une quelconque des revendications précédentes **caractérisé en ce qu'**il est réalisé dans la paroi (12) d'un réacteur (1).

13. Dispositif de logement d'une sonde de mesure de température selon l'une quelconque des revendications 1 à 11 **caractérisé en ce qu'**il est réalisé dans la paroi (12) d'une colonne (25).

14. Dispositif de logement d'une sonde de mesure de température selon la revendication précédente **caractérisé en ce qu'**il est réalisé sensiblement horizontalement dans la paroi latérale d'une colonne de distillation (25) au niveau de l'un de ses paliers de distillation.

## Claims

1. Device for lodging a temperature measurement sensor in a container such as for example a reactor, a tank, a column or the like, through the wall of this, **characterised in that** it comprises a deformation located on the wall (12) of the container (1, 25) in the form of a recess (21) not traversing the wall and directed towards the interior of the container and **in that** this recess (21) defines, on the exterior side of the container (1, 25), a concave space called lodging (23) capable of lodging a temperature sensor (17) by contact against a wall, the wall of this lodging (23) forming a distant temperature measuring area towards the interior of the container.

2. Device for lodging a temperature sensor according to claim 1 **characterised in that** the thickness of the wall (12) of the container (1, 25) gradually reduces to the level of the recess (21), until it is minimal at the measuring point area.

3. Device for lodging a temperature sensor according to any of the previous claims **characterised in that** the base (22) of the lodging (23), corresponding to the part of the lodging furthest inside the container (1), constitutes the temperature measuring area.

4. Device for lodging a temperature sensor according to any of the previous claims **characterised in that** the recess (21) is immersed in the reaction medium (9) in an area distanced from the surface heat flux.

5. Device for lodging a temperature sensor according to any of the previous claims **characterised in that** it is carried out in the lower part of the container (1).

6. Device for lodging a temperature sensor according to any of the previous claims **characterised in that** it is capable of receiving a sensor (17) for measuring temperature to be mounted by means of a pushing device in the lodging (23).

7. Device for lodging a temperature sensor according to any of the previous claims **characterised in that** it is capable of receiving a sensor (17) for contact temperature measurement through SLR, DR or SVR type.

8. Device for lodging a temperature sensor according to any of the previous claims **characterised in that** it includes means for maintaining the sensor (17) in the measuring position.

9. Device for lodging a temperature sensor according to any of the previous claims **characterised in that** the means for maintaining the sensor (17) include a bayonet device.

10. Device for lodging a temperature sensor according to any of the previous claims **characterised in that** it is carried out in the wall (12) of a container (1) whose temperature is regulated by means of a fluid coolant (14) circulating in a jacket (13).

11. Device for lodging a temperature sensor according to any of claims 1 to 9 **characterised in that** it is carried out in the wall (12) of a container (1) whose temperature is regulated by means of a fluid coolant (14) circulating in a coil.

12. Device for lodging a temperature sensor according to any of the previous claims **characterised in that** it is carried out in the wall (12) of a reactor (1).

13. Device for lodging a temperature sensor according to any of claims 1 to 11 **characterised in that** it is carried out in the wall (12) of a column (25).

14. Device for lodging a temperature sensor according to the previous claim **characterised in that** it is carried out slightly horizontally in the lateral wall of a distillation column (25) at the level of one of its distillation stages.

## Patentansprüche

1. Aufnahmevorrichtung für eine Messsonde für die Innentemperatur eines Behälters wie zum Beispiel eines Reaktors, eines Tanks, einer Kolonne oder anderem, durch die Wand von letzterem hindurch, **gekennzeichnet dadurch, dass** sie eine lokalisierte Verformung der Wand (12) des Behälters (1, 25) in Form einer Vertiefung umfasst (21), die nicht die Wand durchquert und zum Inneren des Behälters hin gewandt ist, und **dadurch**, dass diese Vertiefung (21) an der Außenseite des Behälters (1, 25) einen hohlen Raum definiert, der Aufnahme (23) genannt wird und eine Temperaturmesssonde (17) durch Kontakt gegen eine Wand unterbringen kann, wobei die Wand dieser Aufnahme (23) einen Temperaturmessbereich bildet, der zum Inneren des Behälters hin entfernt ist.

2. Aufnahmevorrichtung für eine Temperaturmesssonde nach Anspruch 1, **gekennzeichnet dadurch, dass** die Dicke der Wand (12) des Behälters (1, 25) allmählich bis zur Höhe der Vertiefung (21) hin abnimmt, bis sie im Bereich des Messpunktes minimal ist.

3. Aufnahmevorrichtung für eine Temperaturmesssonde nach einem beliebigen der vorherigen Ansprüche, **gekennzeichnet dadurch, dass** der Boden (22) der Aufnahme (23), der dem innersten Teil der Aufnahme des Behälters (1) entspricht, den Temperaturmessbereich darstellt.

4. Aufnahmevorrichtung für eine Temperaturmesssonde nach einem beliebigen der vorherigen Ansprüche, **gekennzeichnet dadurch, dass** die Vertiefung (21) in das Reaktionsmittel (9) in einem vom Oberflächenwärmestrom entfernten Bereich eintaucht.

5. Aufnahmevorrichtung für eine Temperaturmesssonde nach einem beliebigen der vorherigen Ansprüche, **gekennzeichnet dadurch, dass** sie in dem Unterteil des Behälters (1) verwirklicht ist.

6. Aufnahmevorrichtung für eine Temperaturmesssonde nach einem beliebigen der vorherigen Ansprüche, **gekennzeichnet dadurch, dass** sie eine Temperaturmesssonde (17) aufnehmen kann, die per Stößel in der Aufnahme (23) montiert wird.

7. Aufnahmevorrichtung für eine Temperaturmesssonde nach einem beliebigen der Patentansprüche 1 bis 5, **gekennzeichnet dadurch, dass** sie imstande ist, eine Kontakt-Temperaturmesssonde (17) vom Typ SLR, DR oder SVR aufzunehmen.

8. Aufnahmevorrichtung für eine Temperaturmesssonde nach einem beliebigen der vorherigen Ansprüche, **gekennzeichnet dadurch, dass** sie ein Mittel zur Beibehaltung der Sonde (17) in Messposition umfasst.

9. Aufnahmevorrichtung für eine Temperaturmesssonde nach dem vorherigen Anspruch, **gekennzeichnet dadurch, dass** das Mittel zur Beibehaltung der Sonde (17) eine Bajonettvorrichtung umfasst.

10. Aufnahmevorrichtung für eine Temperaturmesssonde nach einem beliebigen der vorherigen Ansprüche, **gekennzeichnet dadurch, dass** sie in der Wand (12) eines Behälters (1) verwirklicht ist, dessen Temperatur mittels einem Wärmeträger (14) geregelt wird, der in einem Doppelmantel (13) zirkuliert.

11. Aufnahmevorrichtung für eine Temperaturmesssonde nach einem beliebigen der Patentansprüche 1 bis 9, **gekennzeichnet dadurch, dass** sie in der Wand (12) eines Behälters (1) verwirklicht wird, dessen Temperatur mittels einem Wärmeträger (14) geregelt wird, der in einer Halbrohrschlange zirkuliert.

12. Aufnahmevorrichtung für eine Temperaturmesssonde nach einem beliebigen der vorherigen Ansprüche, **gekennzeichnet dadurch, dass** sie in der Wand (12) eines Reaktors (1) verwirklicht wird.

13. Aufnahmevorrichtung für eine Temperaturmesssonde nach einem beliebigen der Patentansprüche 1 bis 11, **gekennzeichnet dadurch, dass** sie in der Wand (12) einer Kolonne (25) verwirklicht wird.

14. Aufnahmevorrichtung für eine Temperaturmesssonde nach dem vorherigen Anspruch, **gekennzeichnet dadurch, dass** sie etwa waagrecht in der Wand seitlich von einer Destillationskolonne (25) auf Höhe einer ihrer Destillationsphasen verwirklicht wird.
